# EUROPEAN PATENT APPLICATION

(11) **EP 1 600 350 A1**
(43) Date of publication of application: **30.11.2005**
(21) Application number: 04251045.3
(22) Date of filing: 25.02.2004
(51) Int. Cl.: B61K 3/02

(54) **Applicator for a consumable member and composite lubricating stick**

(71) Applicant: Kelsan Technologies Corp., North Vancouver, British Columbia V7P 1M9 (CA)
(72) Inventor: Harris, Bob, Stoke-on-Trent, Staffordshire ST3 7LT (GB); Hui, Ron, Burnaby, BC, V5A 4C6 (CA); De Wet, Jonathan, North Vancouver, BC, V7M 1E8 (CA); McKay, Douglas Robert, Burnaby, BC, V5J 1V2 (CA)
(74) Representative: Lee, Nicholas John

(57) **Abstract**

The present application relates to an applicator for a consumable member. The applicator comprises a spindle (130,140), a hub (40) pivotally connected to the spindle and adapted to connect to the consumable member, and a biasing assembly (120) for rotating the hub relative to the spindle. Rotation of the hub relative to the spindle advances the consumable member. The applicator of the present invention can be used to lubricate a metal surface, such as the flange of a rail car wheel. The present application also relates to a composite stick for lubricating a metal surface. The composite stick comprises a solid composition made of a first material, wherein one, or more than one surface of the solid composition has a coating of a composition comprising a second material. The first material of the composite stick may be a lubricant, and the second material of the coating may be a polymeric material.

## Description

The present invention relates to an applicator for housing a solid composition stick. More particularly, the present invention relates to an applicator for a straight or arc-shaped solid composition stick. The present invention also relates to a composite stick for lubricating a metal surface, such as the flange of a rail car wheel.

### BACKGROUND OF THE INVENTION

Systems are known for lubricating or otherwise modifying the coefficient of friction between steel surfaces in sliding contact, for example, the flanges of rail car wheels and a track, or fifth-wheels. One type of system uses a liquid lubricant, such as oil or grease, to lubricate the flanges of the rail car wheels. A problem associated with these liquid lubrication systems, however, is the inability to meter the amount of the liquid lubricant applied in a controlled manner. This lack of control may result in the application of an excess amount of liquid lubricant to the flanges of the rail car wheels causing some of the lubricant to runoff onto the tread portion of the rail car wheels. The lubricant on the tread portion of the wheels can then coat the top of the rail and result in appreciable slippage of the rail car wheels on the rail. In addition, if the liquid lubricant is applied at too high a flow rate it may be flung from the wheel to beneath the rail car, and result in contamination of the environment.

In attempting to overcome the above problems experienced with liquid lubrication systems, solid lubricant or friction modifier compositions in the form of sticks, for example U.S. Patent No. 6 136,757 (which is incorporated herein by reference), have been used to apply compositions to the flanges of rail car wheels. As these solid sticks are usually made of hard, brittle materials, applicators for use with these sticks have been developed, which are capable of withstanding the severe vibration and shock conditions experienced during operation. Applicators having a rectangular conduit for accommodating a rectangular shaped lubricant stick have been used to apply lubricant to the flange of rail car wheels. These applicators are, however, difficult to reload, and can only accommodate sufficient lubricant material for short duration transit systems, or for closed track systems.

An alternate applicator for use with a solid composition utilizes an arc-shaped solid composition stick produced by Kelsan Technologies Corporation. This applicator, is circular in shape, and houses a one-piece, arc-shaped, composition stick. This type of applicator is suitable for both closed and open rail systems as the length of the stick is greater than the rectangular sticks mentioned above, and the useable life of the composition stick is increased. Upon completion of the composition stick, the entire applicator is discarded. To simplify attaching and removing the circular applicator, a centrally located fastening point is used to connect the applicator to the undercarriage of a rail car. However, the central attachment point reduces the extent of repositioning of the applicator relative to the flange of the rail car wheel, and may also allow increased vibration of the applicator while in use, resulting in damage to the composition stick. Furthermore, the actuating mechanism used for advancing the composition stick is in contact with the environment, and can, consequently, become contaminated and corroded during use, thereby reducing its lifetime.

It is an object of the invention to provide an improved composite friction modifer and delivery system.

### SUMMARY OF THE INVENTION

The present invention relates to an applicator for a solid composition stick. More particularly, the present invention relates to an applicator for a straight or an arc-shaped solid composition stick. The present invention also relates to a composite stick for lubricating a metal surface, such as the flange of a rail car wheel.

The present invention provides an applicator for a consumable member, comprising, a hub connected to one or more than one mounting element, the one or more than one mounting element for connecting the hub to the consumable member, a spindle pivotally connected to the hub, and a biasing assembly for rotating the hub relative to the spindle. The applicator may include the consumable member, which can be straight or arc-shaped.

The present invention also pertains to the applicator defined above, wherein the consumable member is positioned about the outside of the hub.

The present invention also relates to the applicator defined above, wherein the hub is cylindrical in shape, and wherein the arc-shaped consumable member is positioned about the circumference of the hub.

The present invention also provides the applicator defined above, wherein the applicator further comprises a mounting plate for connecting the hub to the consumable member. The mounting plate may be fixedly connected about the outside of the hub.

The present invention also relates to the above-described applicator, wherein the applicator further comprises a locking arm for fixing the position of the hub relative to the spindle.

The present invention also provides the applicator defined above, wherein the applicator further comprises an external mounting plate, and wherein the spindle is fixedly connected to the external mounting plate. The external mounting plate may be used to connect the applicator directly to an undercarriage of a railcar, or to a bracket connected to an undercarriage of a railcar.

The present invention is also directed to the applicator defined above, wherein the biasing assembly is in operative association with the spindle and with the hub. In one example, the biasing assembly is a spring assembly.

The consumable member may comprise two, or more than two materials, such as a solid lubricant composition and one, or more than one non-lubricant material, for example, one, or more than one polymeric material. More particularly, the consumable member may comprise a composition stick made of a first material, wherein one, or more than one longitudinal surface of the composition stick is coated by a composition made of a second material.

Alternatively, the consumable member may comprise a housing defining an arc-shaped conduit or channel, the arc-shaped conduit or channel being sized to accept an arc-shaped composition stick, wherein the arc-shaped composition stick is made of a first material and the housing is made of a second material. The consumable member as defined immediately above may further comprise the arc-shaped composition stick. The first material may be a lubricant, and the second material may be a non-lubricant material, such as a polymeric material.

The housing of the applicator defined above may be fabricated from a polymer having a suitable tensile strength, or compression strength. Non-limiting examples of a polymer include high density polyethylene (HDPE), or Nylon®. Alternatively, the housing may be fabricated from aluminum, steel or fiber reinforced plastic (FRP).

The present invention also provides a composite stick for lubricating a metal surface, comprising a solid composition made of a first material, wherein one, or more than one surface, such as a longitudinal surface, of the solid composition has a coating of a composition comprising a second material.

The present invention also provides the composite stick defined above, wherein the second material has a a wear resistance that is the same or greater than the first material.

The present invention also pertain the composite stick defined above, wherein the metal surface is the flange of a rail car wheel.

The present invention is also directed to the composite stick defined above, wherein the coating is for removing contaminants from the flange of the rail car wheel.

The present invention also provides the above-defined composite stick, wherein the first material is a lubricant, and the second material is a non-lubricant material. The non-lubricant material may be a polymeric material, such as polybutylene terephthalate (PET), polyethylene terephthalate (PET) or an acetal thermoplastic.

A robust applicator is provided that is characterized as having an increased duration period between refills along with an increased ease of replacement, and that is capable of minimizing vibrational effects on a solid composition stick housed within. Furthermore, the present invention is directed to an applicator that has a biasing mechanism for advancing a composition stick, which is isolated from the detrimental effects of the environment, and that can be adjusted to optimize its interface with a desired steel surface for treatment.

The applicator of the present invention is stronger and more rigid than prior art applicators for straight or arc-shaped solid composition sticks. The improved rigidity reduces fatigue and vibrations that reduce wear on the applicator and the mounting used to connect the housing of the applicator to the undercarriage of a rail car, and increases the vibrational stability of the applicator, compared to prior art applicators.

The applicator as described herein may be easily refilled, and does not need to be disposable. The applicator may be refilled by connecting a new consumable member to the outside of the hub of the applicator. The process of refilling does not require disassembly of the applicator housing. By increasing the length of the consumable member, the frequency of refilling the applicator can be reduced.

Prior art circular or linear (straight) applicators for lubricating the flanges of rail car wheels define conduits that are loaded with one, or more than one solid lubricant composition stick. When the actuating element of these applicators is engaged, the solid composition stick is moved along a conduit and through an opening that is in commmication with the interior of the applicator. In highly contaminated environments, the interiors of these applicators may be clogged up by sand and debris entering through the opening, thereby hindering the application of the lubricant composition sticks to the flange of rail car wheels. Similarly, in contaminated environments the surface of the rail wheel may abrade the composition more rapidly than in less contaminated environments.

The applicator of the present application does not define a conduit for accommodating solid composition sticks, or have an opening in communication with its interior. Rather, the applicator of the present invention comprises a consumable member that includes a solid composition stick. As the consumable member advances, the composition stick and the consumable member interface with the surface of the steel surface. As a result, contamination from the environment cannot enter the inside of the present applicator, and hinder movement of the composition stick.

Besides the ability to foul up applicators for solid compositions, sand and debris can also wear down solid composition sticks through abrasion. The consumable member used with the applicator of the present invention assists in controlling the wear rate of the composition stick, and to increase the life of the solid composition stick. More specifically, the consumable member has wear resistance that is the same or greater than than the composite stick to which it is connected, and, as a result, the wear rate of the consumable member will dictate the effective wear rate of the combination of the consumable member and the composition stick. In addition, the material of the consumable member may be configured to first contact the advancing steel surface, for example a flange of a rail car wheel, and will act as a scraper to dislodge any debris present on the surface.

The space available in the hub of the applicator of the present invention permits the use of a biasing element that is more robust than those used in prior art straight or circular applicators. The stress on such a biasing element will, therefore, be considerably less than the stress experienced by the relatively less robust biasing elements used in the prior art applicators. Furthermore, use of such a biasing element within the protective environment of the applicator of the present invention can enhance the lifetime of the biasing element.

This summary of the invention does not necessarily describe all features of the invention.

### BRIEF DESCRIPTION OF THE DRAWINGS

These and other features of the invention will become more apparent from the following description in which reference is made to the appended drawings wherein:
**Figure 1** shows a prior art applicator for an arc-shaped lubricant stick. Figure 1A shows a top view of the prior art applicator. Figure 1B shows a sectional view of the prior art applicator at line 1B-1B.
**Figure 2** shows a non-limiting example of the applicator of the present invention.
**Figure 2A** shows top perspective view. **Figure 2B** shows a bottom perspective view of the applicator of Figure 2A.
**Figure 3** shows an exploded view of non-limiting examples of the applicator of the present invention. **Figure 3A** shows an exploded perspective view. **Figure 3B** shows an exploded perspective view of another example of the applicator of the present invention.
**Figure 4** shows a non-limiting example of a consumable member of the present invention. **Figure 4A** shows a top perspective view of a consumable member for use with the applicator of the present invention. In this example, the consumable member comprises a top and bottom polymeric section with a conduit for enclosing a solid lubricant stick. Figure **4B** shows a side perspective view of the consumable member of Figure 4A. **Figure 4C** shows side view of an alternate example of a consumable member of the present invention.
**Figure 5** shows various views of an example of a segmented friction modifier stick.
**Figure 5A** shows a top plan view of a segmented friction modifier stick. **Figures 5C-D** shows different perspective views of a segmented friction modifier stick.
**Figure 6** shows a cross sectional view of the consumable member of Figures 4A-B, comprising a solid lubricant composition stick.
**Figures 7** shows several views of a non-limiting example of an applicator of the present invention. **Figure 7A** shows a top perspective view of the applicator as shown in Figure 2 connected to the consumable member shown in Figure 6. **Figure 7B** shows a bottom perspective view of the applicator of Figure 7A.
**Figure 8** shows a non-limiting example of the applicator of the present invention.
**Figure 8A** shows a top plan view of an applicator comprising a consumable member.
**Figures 8B-C** shows cross-sectional views along the line 8B, 8C-8B, 8C of the applicator of Figure 8A.
**Figure 9** shows an exploded perspective view of the applicator shown in Figure 8B.
**Figure 10** shows an exploded cross-sectional view of the applicator shown in Figure 8B.
**Figure 11** shows an exploded perspective view of the applicator shown in Figure 8C.
**Figure 12** shows an exploded cross-sectional view of the applicator shown in Figure 8C.
**Figure 13** shows an example of the wear pattern of the outer periphery of the consumable member of the present invention as it is progressively consumed during use.
**Figure 14** shows non-limiting examples of friction modifier composite sticks as described herein. **Figure 14A-F** show various arrangements of the outer coating of the composition stick.
**Figure 15** show an alternate example of the friction modifier composite stick of the present invention.
**Figure 16** shows a top plan view of a circular applicator within which arc-shaped composition sticks as shown in Figures 14 and 15 of the present invention may be inserted.

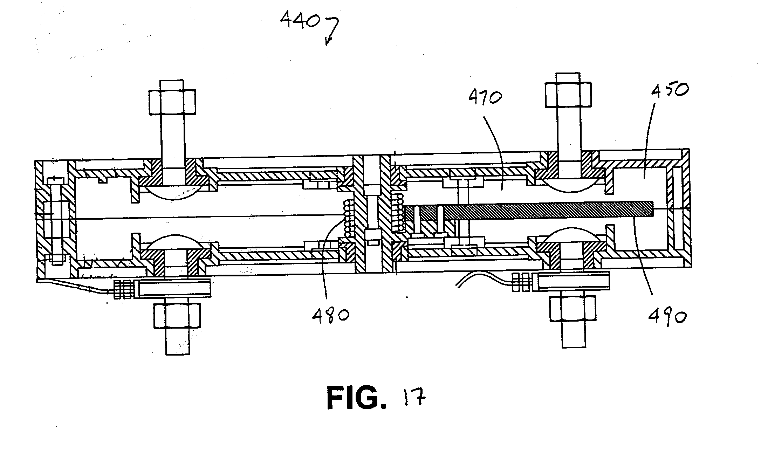

**Figure 17** shows a cross-sectional view, along line 16-16, of the circular applicator of Figure 16.

### DETAILED DESCRIPTION OF PREFERRED EMBODIMENTS

The present invention relates to an applicator for a solid composition stick. More particularly, the present invention relates to an applicator for a straight or arc-shaped solid composition stick. The present invention also relates to a composite stick for lubricating a metal surface, such as the flange of a rail car wheel.

The following description is of a preferred embodiment.

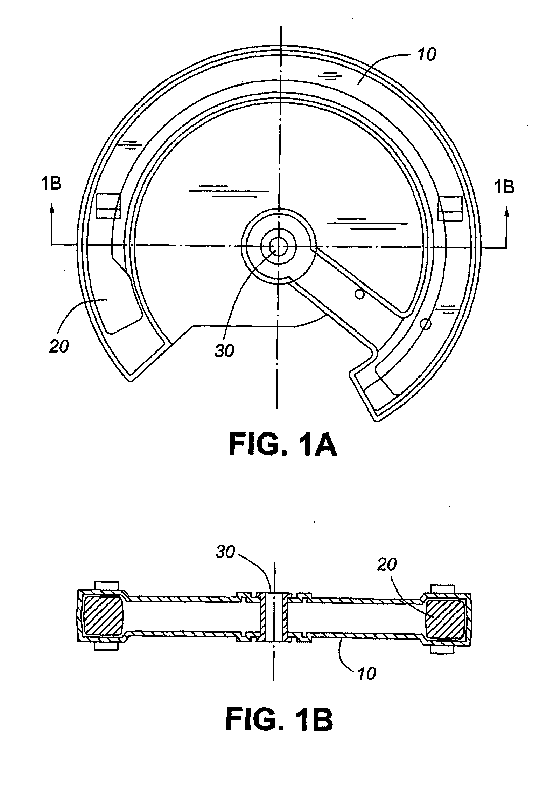

Figure 1 shows a prior art circular applicator (10). This applicator is effective in extending the duration of use of a composition stick (20) under field conditions. The applicator is replaced after the stick is consumed. The applicator is attached to the undercarriage of a rail car by a central fastening point (30), which permits rapid replacement of the applicator. However, the biasing assembly of the prior art applicator can be contaminated by dirt and debris from the environment due to its accessibility, and, as a result can be become corroded during use and require replacement. In addition, the opening for the composition stick (20) may also become clogged by dirt and debris from the environment, impeding the application of the composition stick to the flange of a rail car wheel.

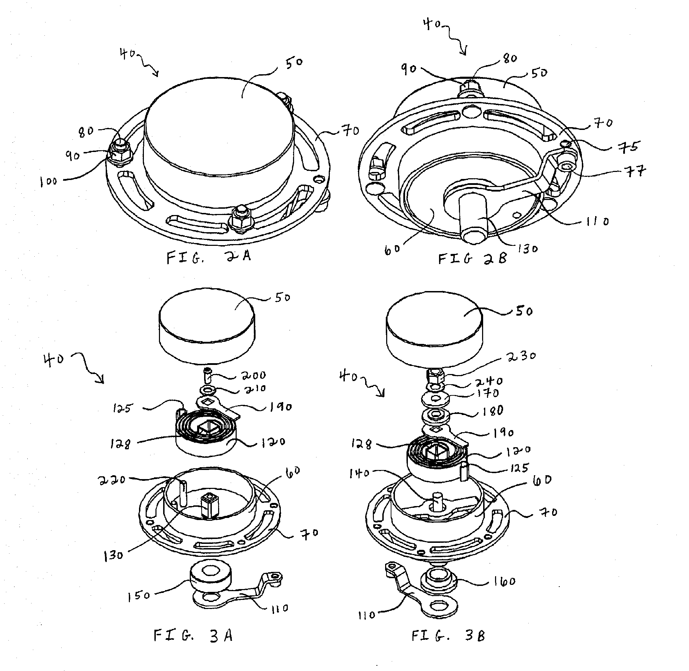

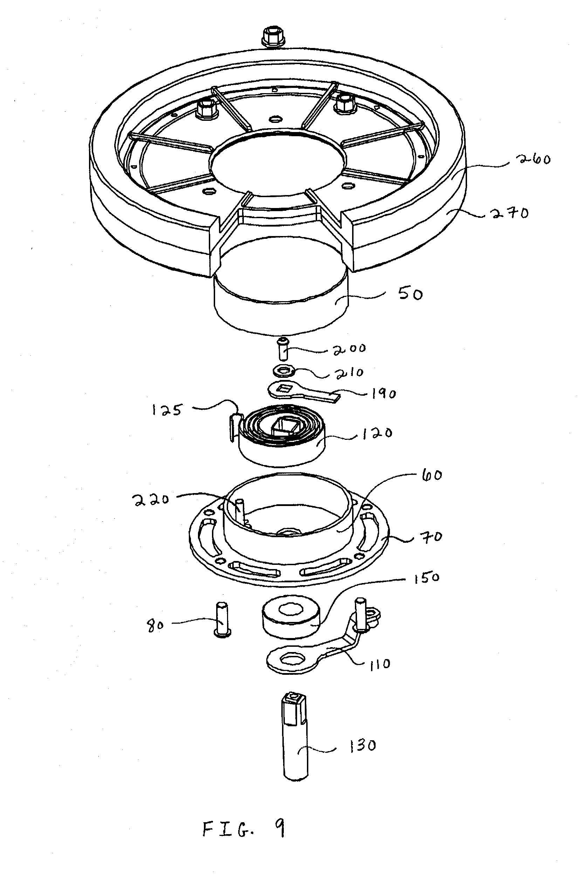

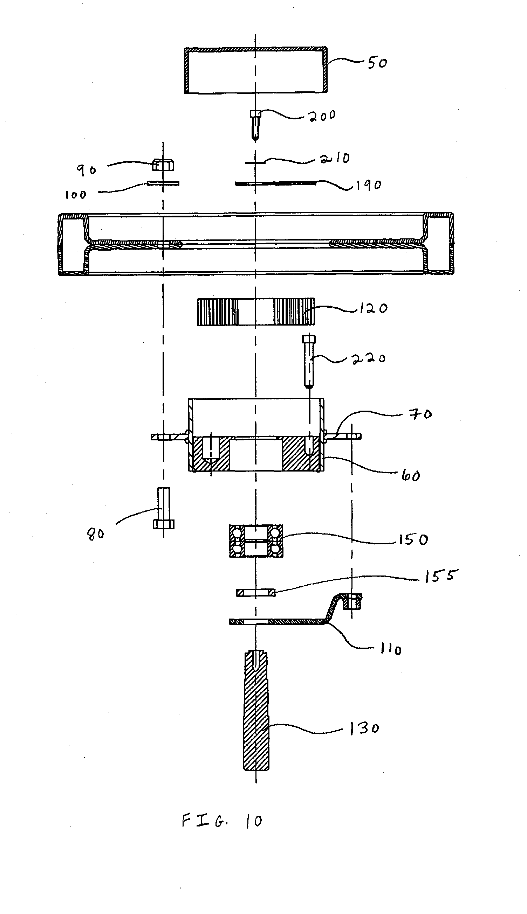

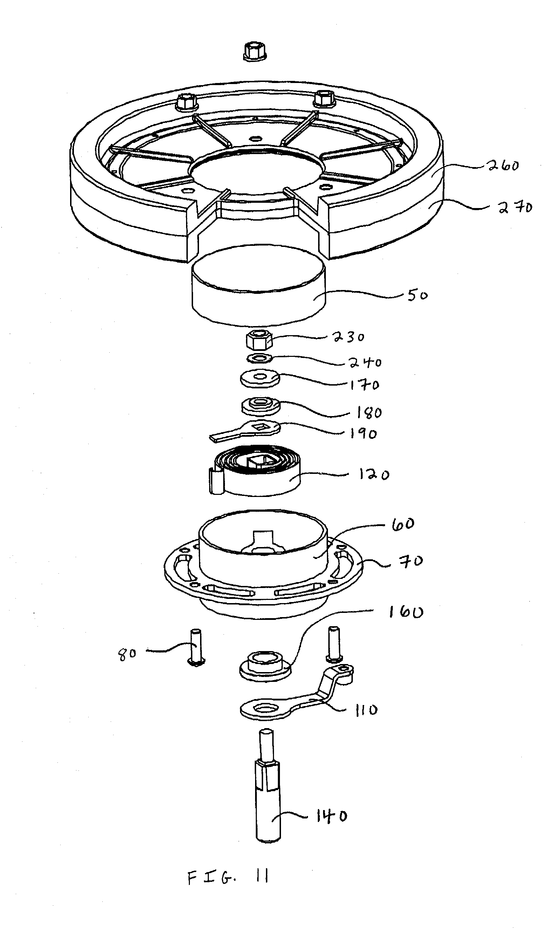

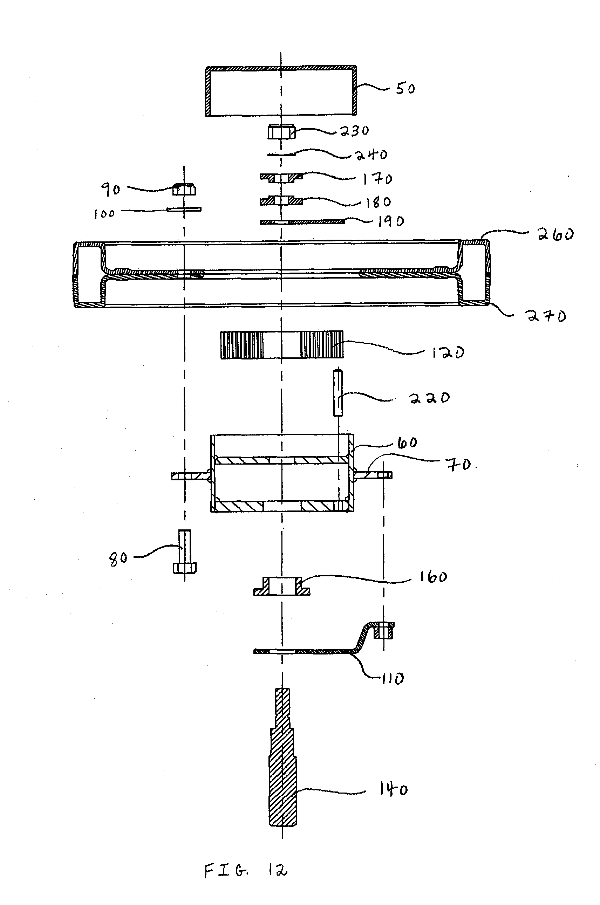

Referring to Figures 2A-B, 3A-B, 8B-C and 9-12, there are shown non-limiting examples of the applicator according to the present invention. In the examples shown, the applicator comprises a bottom receptacle (60) and a cover (50), which form the hub (40) of the applicator. The applicator also includes a spindle (130, 140) and one or more than one mounting element, in this example shown as a continuous flange (70) around the periphery of the bottom receptacle. The applicator also includes a biasing element (120) in operative association with the bottom receptacle (60) or cover (50) of the hub (40), and the spindle (130, 140).

After being activated, the biasing element (120) rotates the hub relative to the spindle (130, 140), which is connected, for example, by registering, bolting or welding, to an external mounting plate (not shown). The external mounting plate may be directly connected to the undercarriage of a railcar, or be connected through an intermediary bracket. Slots may be present in the external mounting plate or bracket to allow for adjustment of the hub in the longitudinal and lateral directions.

Hub (40) may comprise a pin (220) or another element for fixing an end (125) of biasing element (120) relative to the bottom receptacle (60) or cover (50). A central region (128) of biasing element (120) is connected to a top region of the spindle (130, 140) and operates in conjunction with a limit arm (190). In this non-limiting example, the biasing element, for example a spring is wound to a predetermined angular rotation, and the limit arm (190) that is fixed to the spindle, and together with pin (220) prevents the biasing element from unwinding. In one example of the applicator shown in Figures 3A, 8B, 9, and 10, a bolt (200) and washer (210) are used to secure biasing element (120) about the top of spindle (130). In the example shown in Figures 3B, 8C, 11 and 12, a nut (230) and washer (240) are used to secure biasing element (120) about the top of spindle (140).

In order to improve wear, the biasing element (120), may be made of a sturdy, corrosion-resistant material, such as anodized aluminum. Although a spiral torsion spring is used as the biasing element in the applicator shown in Figures 3A-B, other types of biasing elements such as a helical torsion spring, a constant force motor spring, and a power spring, which can fit within the interior of the hub (40) can also be used.

As a result of being situated in the closed housing of the hub (40), the biasing element (120) is shielded from air borne contaminants from the environment, thereby preventing premature aging of the biasing element.

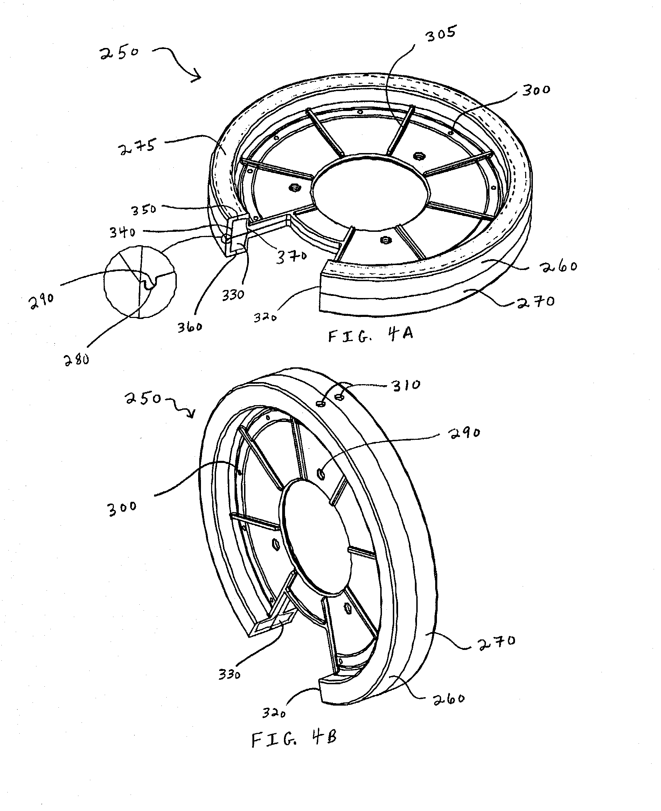

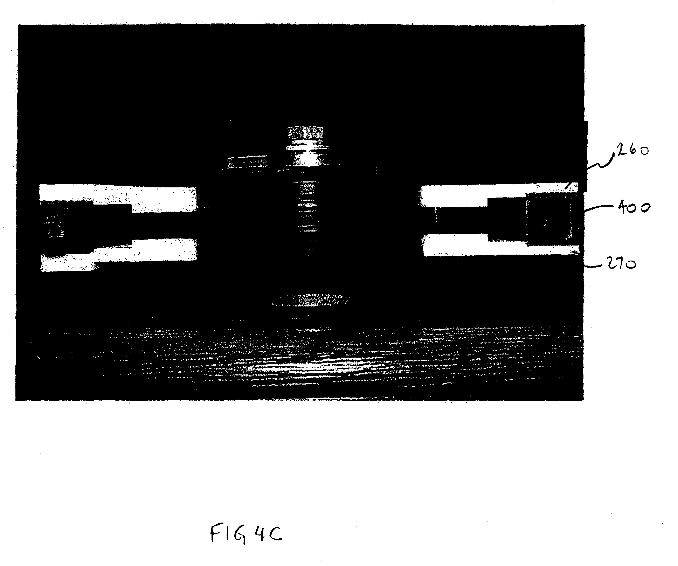

A mounting element, for example but not limited to, a continuous flange as shown in Figures 3A and B (70) is used for connecting the hub (40) to a consumable member (250; for example as in Figure 4 a and B). In the embodiment shown in Figures 3 A and B, the mounting element is shown as a continuous flange that is molded, fastened or welded about the circumference of the bottom of the receptacle (60) of the hub (40). However, alternate mounting elements may also be used and are within the scope of the present invention. For example, a mounting element may include one or more than one flanges that extend from the circumference of the bottom of the receptacle (60) and that are discontinuous around the circumference of the receptacle, and the consumable member fastened to the flanges.

Alternatively, the mounting element may comprise a series of registration pins, or other registration device that matingly fit with a corresponding complementary registration device on the consumable member. In this embodiment, the pin or other registration device of the mounting element may be positioned within the bottom of the receptacle (40) so that when the inner circumference of the consumable member (e.g. 250) comprising the corresponding complementary registration device, is placed onto the mounting element, the cover of the hub (50) that is placed overtop of the bottom of the receptacle overlaps the inner circumference of the consumable member and presses the consumable member to the hub. The fastening of the consumable member to the hub is accomplished by attaching the cover to the bottom of the receptacle via a bolt, snap or other similar fastener.

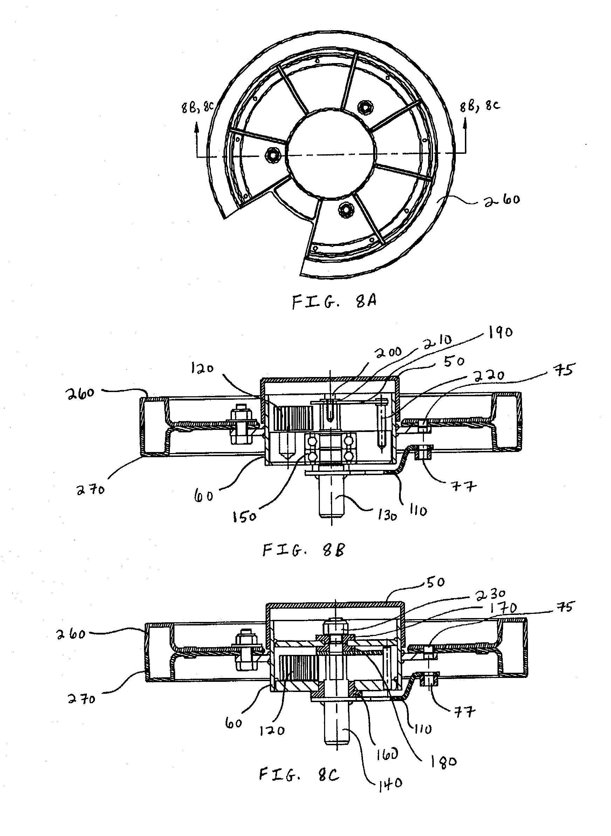

In one example which is not to be considered limiting, of the applicator of the present invention (see Figures 3A, 8B. 9 and 10), one or more than one bearing (150), in combination with an optional spacer ring (155) may be used to facilitate the rotation of the hub (40) relative to the spindle (130). In another example, shown in Figures 3B, 8C, 11 and 12, lubrication impregnated bushings (160, 170 and 180) may be used.

Referring to Figures 4A-B, 6, 7A-B, 8A-C and 9-12, there is shown an example of a consumable member (250) that can be loaded onto the applicator of the present invention. The consumable member (250) may comprise an upper section (260) and a lower section (270), which may be mated to each other via female and male location edges (280, 290; Figure 4A). Alternatively, the top and bottom sections may be separated from each other forming a sandwich on either side of the composition stick (se Figure 4C). The top and bottom sections of the consumable member may be formed of the same material, or made of separate materials having different degrees of wear resistance. Furthermore, the top and bottom portions of the consumable member may have the same or different thickness.

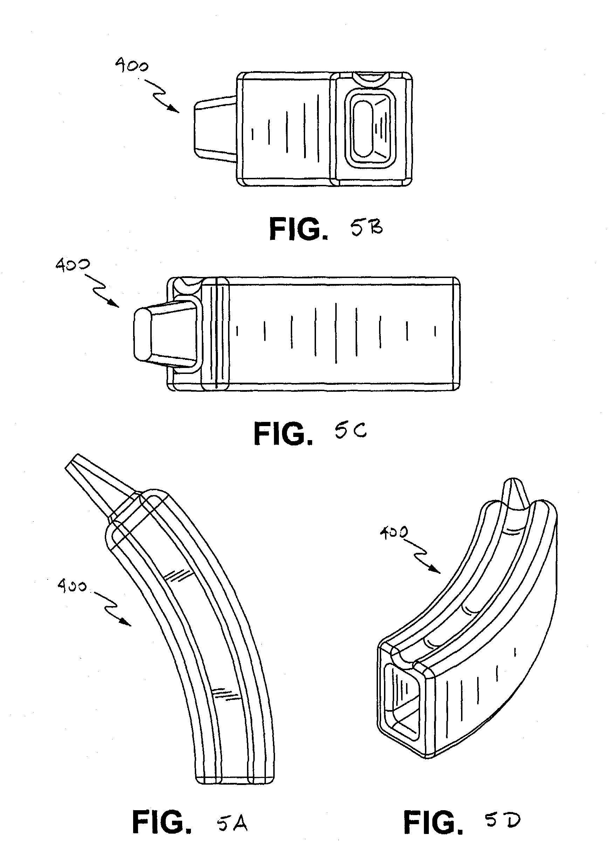

When connected, the top and bottom sections (260, 270) define a guide or conduit for accommodating the composition stick. In the examples shown in Figures 4A-C, the conduit is an arc-shaped conduit (275) for accommodating an arc-shaped composition stick (400; Figure 5A). However, linear or straight conduits may also be used in an analogous manner. The upper and lower sections (260, 270) may be connected by a series of fasteners inserted through openings (300), which are located about the surface of the top and bottom sections. Each fastener may be secured in place using a suitable retainer, such as a bolt or clip fastener.

Alternatively, a fastener made of a similar material to that of the consumable member, and inserted through the upper and lower section within the conduit (e.g. 275) potion of the consumable member may be used to attach the upper and lower sections together after a composition stick is placed within the conduit. In this manner, a composition stick that is placed within conduit (275) is pinned by the fastener and restricts any movement of the composition stick within the conduit.

To ensure that there is no movement of the composition stick within the conduit, the upper, lower, or both sections may comprise one or more than one key or slot (not shown) that registers against a corresponding slot or key within the composition stick. A stop may be also positioned at 320 (Figure 4A) to restrict movement of the composition stick within the conduit.

The consumable member may also be fabricated as a one piece housing comprising both a top and a bottom portion. Again, the top and bottom portions of the consumable member may be formed of the same material, or made of separate materials having different degrees of wear resistance, and the top and bottom portions of the consumable member may have the same or different thickness.

The top and bottom sections of the consumable member (250) shown in Figures 4A-B may include a series of injection-molded ribs (305), which provide strength and durability to the overall structure of the housing. The ribs (305) rigidify the housing, and provide resistance to vibrations and shocks that may be encountered during use of the applicator.

The conduit of the consumable member may act as a mold for a lubricant composition, which can be introduced within the conduit as a low molecular weight liquid through filling holes (310; Figure 4B) located on the side of the consumable member (250), and allowed to polymerize and harden into a solid. The consumable member may also be molded around the composition stick to form a one-piece composite structure. Alternatively, an arc-shaped composition stick (400) can be molded separately and placed into the consumable member through inlet (320) or outlet (330), which are in communication with the arc-shaped conduit (275). As described above, the composition stick (400) may be inserted within either the top (260) or the bottom (270) section and the sections fastened together, or the composition stick may be sandwiched between the top and bottom sections as shown in Figure 4C.

The non-limiting example of the consumable member shown in Figures 4A-B defines an arc-shaped conduit (275) having a continuous outer wall (340), a continuous top wall (350), a continuous bottom wall (360), and a continuous inner wall (370). In another example, the continuous outer wall (340) may be absent as shown in Figure 4C. Alternatively, the consumable member may comprise only a top section (or a bottom section), which defines a channel having a continuous top (or bottom) wall and the composition stick may be retained within the channel via any suitable mechanism. For example, the inner surfaces of the conduit (275) or channel of the consumable members may be coated with an adhesive, or comprise elements that frictionally engage sections of the arc-shaped composition stick so that it is prevented from sliding out of the consumable member during use. Examples of such elements include, without limitation, sandpaper or protuberances, such as ribs or keys. Alternatively, or in addition, securing elements, such as pins, rivets, or bolts, which are fabricated from a consumable material, may be used to retain sections of the composition stick in place, or a stop member may be added to the end of the consumable member that is not placed in contact with the steel surface, or flange of a rail car wheel, thereby preventing the composition stick from moving out of the consumable member.

For example, if an arc-shaped composition stick is inserted through an inlet of a consumable member formed from a top and a bottom section, then a stop member at the inlet of the consumable member may be used. If, however, top and bottom sections of the consumable member are built about the arc-shaped composition stick, then adhesives, or frictionally engaging elements, or both may be present on one or both of the inner surfaces of the top and bottom sections of the consumable member. Similarly, a consumable member comprising a single top or bottom section may have adhesives, frictionally engaging elements, or both on the surfaces of the channel that it defines.

During use of the applicator, the surfaces of the consumable member and the arc-shaped composition stick, which are in contact with a steel surface, such as a wheel flange, will be consumed. The portion of the consumable member that first makes contact with a flange of a rail car wheel, i.e. the leading edge of the consumable member, can act as a wiper to remove oil and dirt deposits that are present on the flange before the composition stick is applied. For consumable members having both a top, bottom, or both a top and bottom portion, the leading edge of the consumable member, which first contacts the steel surface is characterized as having a wear resistance that is the same or greater than that of the composition stick. The leading edge may be softer, have a similar hardness, or be harder, than that of the composition stick, providing that the wear resistance of the leading edge is the same or greater than the composition stick. Therefore, the leading edge of the consumable member will assist in controlling the rate of wear of the composition stick. If the consumable member comprises both a top and bottom portion, then the leading edge portion of the consumable member may be thicker, or both thicker than the trailing edge portion of the consumable member, which contacts the flange after it has been contacted with the surface of the composition stick.

Ware resistance my be readily determined by comparing the rate of wear of the surface consumable member and that of the composition stick, separately and in combination, when in contact with a moving steel surface, for example using a Stick Tester, an Amsler, or a Taber abraser, as would be known to one of skill in the art.

The consumable members shown in Figures 4A-B define an arc of about 330° extending from the inlet (320), along the conduit (275), and to the outlet (330). However, other lengths of circumference, or arc, of the conduit may also be used for example, but not limited to, an applicator defining an arc from about 180° to about 320° or any degree there between, an arc from about 185° to about 300° or any degree there between, or an arc from about 220° to 280° or any degree there between. For some uses, an applicator comprising a conduit describing an arc of less than 180° may be suitable, for example, for treating fifth wheel surfaces, guide rails in elevators, or closed loop rail-transit systems. In situations where longer periods of use are desired between refilling the applicator, a longer length of arc may be required.

The consumable member (250) of the present invention can comprise a single arc-shaped composition stick, or a set of one, or more than one interlocking arc-shaped composition stick. Non-limiting examples of the interlocking composition sticks for use with the applicator of the present invention are shown in Figures 5A-D. The arc-shaped composition stick (400) is shown to have a rectangular cross section, however, other cross sectional shapes may also be used, including but not limited to, circular, elliptical, rectangular, or triangular. The conduit (275) defined by the consumable member of the present invention can be easily modified to accommodate composition sticks of different cross-sectional areas and shapes.

The combination of the consumable member and the composition stick may be of any desired length. An advantage of using a set of interlocking sticks instead of a single long stick includes the ease with which the consumable member can be filled. Furthermore, the interlocking feature provides support to a segment of a set of interlocking sticks, which is in contact with a surface, such as a wheel flange, and prevents it from falling out of the consumable member and contaminating the environment once it is worn down to a short length. This interlocking feature is, therefore, also advantageous from an economic standpoint as individual segments of the set of interlocking, segmented sticks may be used to completion. The composition stick for use in the applicator of the present invention may be formed of any suitable composition, for example which is not to be considered limiting, one of the compositions disclosed in U.S. Patent No. 6,136, 757, WO 02/26929, European Patent No. 474,750, or Canadian publication 2,069,035, the disclosures of which are incorporated herein by reference.

A guide track may be present on the inside of the upper section (260), or on the inside of the lower section (270), or the inside of both the upper and lower sections (260, 270), for mating engagement with a channel on the arc-shaped composition stick (400). This feature may be used to ensure that an interlocking solid composition stick is inserted into the applicator housing in an orientation that will allow it to properly interconnect with other segments preceding or following it.

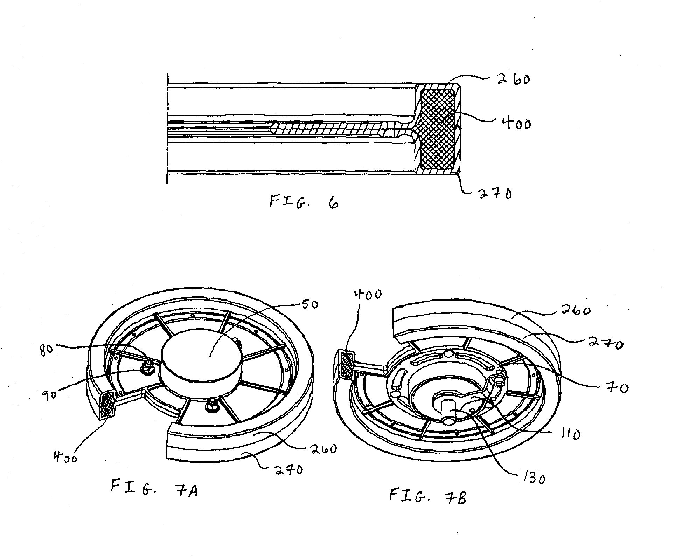

Although the present application has described an applicator that is used with a consumable member comprising segmented, interlocking, or inter-fitting solid composition sticks, as illustrated in Figures 6, 7A-B, 8A-C and 9-12, it is to be understood that the consumable member of the present invention can be used with a straight or an arc-shaped solid composition stick of any length, or cross-sectional shape, which has an length or arc that is complementary to the shape of conduit (275) defined by the consumable member (250). As described above, the composition sticks may comprise features that permit their fitting together, for example a male end and a corresponding female receiving end. However, such ends are not required, and any end, including a flat surface, may be used on a composition stick.

The consumable member (250) may be attached to the mounting plate (70) of the applicator, the hub (40) after the hub is wound back to load the biasing element (120). At its fully wound position, the hub (40) may be temporarily held in position using any suitable device, for example by inserting a pin through an opening (75) in the mounting plate (70) and an opening (77) in the locking arm (110). The consumable member (250) may then be attached to the mounting plate (70) using bolts (80), nuts (90) and washers (100), other fastening device as desired. After the consumable member (250) is connected, the hub (40) is manually held in position, while the pin is removed from the locking arm (110). The applicator is then slowly moved in the direction of the force applied by the biasing element toward the flange of a rail car wheel. The surfaces of the consumable member and the arc-shaped composition stick will be held in contact with the flange of the rail car wheel by the force applied by the biasing element (120).

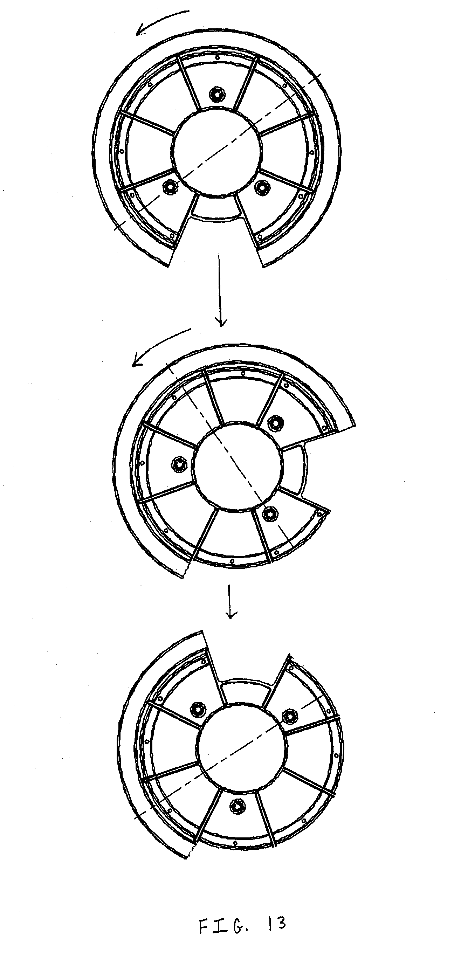

During use of the applicator of the present invention, the outer periphery of the consumable member is progressively consumed through frictional contact with the metal surface to which it is applied (see Figure 13). After the outer periphery of the consumable member is consumed, the remaining fragment of the consumable member may be removed from the attachment plate (70), and the above-described loading process repeated with a new consumable member.

Once the applicator of the present invention is connected to the undercarriage of a railcar by a bogie mounting plate or bracket, its position relative to a rail car wheel can be adjusted by sliding the bogie mounting plate or bracket relative to the undercarriage of the rail car to bring a surface of the consumable member in contact with the flange of the rail car wheel.

The applicator may be fabricated of a lightweight material, so that it does not cause excessive loading on the undercarriage of the rail car that supports it. An example of a material that can be used in the formation of the applicator of the present invention, includes, without limitation, a polymer having a tensile strength of at least about 4500 psi, or a compression strength of at least about 500 psi, or both, for example, but not limited to, high density polyethylene, HDPE, or other similar material.

The consumable member should be made of a material that is consumable under the conditions of its use. The material that is used to produce the consumable member may also display suitable strength and impact resistance to withstand shock and random vibrations when mounted. In addition, as the consumable member may serve as a mold for a solid composition stick, it should be able to withstand the high temperatures necessary for polymerization of the monomers used to form the solid composition. Preferably, the material should not appreciably swell in the presence of water, and it should be thermally stable and injection moldable. The material that forms the consumable member should also have a wear resistance that is the same or greater than that of the composition stick, but a relatively lower value of hardness than the metal surface with which it makes contact, so that the metal surface is not damaged upon contacting the consumable member. For example, if the metal surface that is lubricated by the applicator of the present invention is the flange of a rail car wheel, then the material that forms the consumable member may have a Rockwell Hardness of from about M50 to about M140. Examples of material that are suitable for use with rail car wheels of trams include, without limitation, polybutylene terephthalate (PBT), polyethylene terephthalate (PET) or an acetal thermoplastic.

The present application also relates to a composite stick (410) for lubricating a metal surface, comprising a solid composition (420) made of a first material, wherein one, or more than one surface, for example, a longitudinal surface, of the solid composition has a coating (430) of a composition comprising a second material.

The metal surface may be any metal surface that requires lubrication, for example, the flange of a rail car wheel, or the rail guide of an elevator.

Like the consumable member used with the applicator of the present application, the coating on the solid composition functions by removing contaminants from the metal surface. As a result, the second material that forms the coating should have a wear resistance that is the same or greater than that of the first material, but a relatively lower value of hardness than the metal surface with which it makes contact, so that the metal surface is not damaged upon contacting the coating. Examples of material having these properties of hardness include polymeric material, such as polybutylene terephthalate (PBT), polyethylene terephthalate (PET), or an acetal thermoplastic. The solid composition may any type of lubricant composition, for example which is not to be considered limiting, one of the compositions disclosed in U.S. Patent No. 6,136, 757, European Patent No. 474,750, WO 02/26929 or Canadian publication 2,069,035, the disclosures of which are incorporated herein by reference.

The portion of the composite stick that first makes contact with the metal surface, i.e. the leading edge of the composite stick, can act as a wiper to remove oil and dirt deposits that are present on the metal surface before the composition stick is applied. For composite sticks having a coating of the second material on both their upper and lower longitudinal surfaces, the surface of the coating of the second material, which contacts the metal surface, and which includes the leading edge, may be thicker than the surface of the coating of the second material, which contacts the metal surface after it has been contacted with the surface of the solid composition.

In addition, the coating of the second material will generally have a higher value of hardness than that of the composite stick, and, as a result, the wear rate of the coating of the second material will dictate the wear rate of the composite stick.

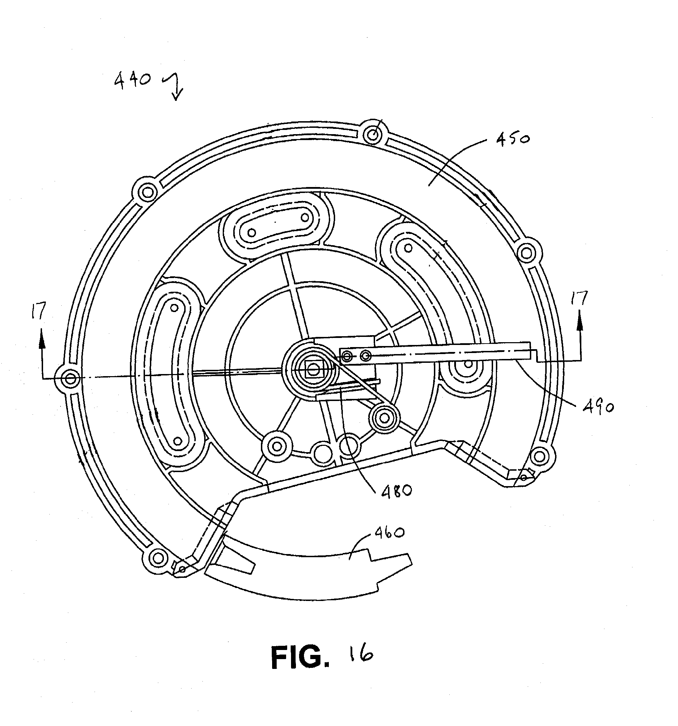

Non-limiting examples of the composite sticks of the present invention are illustrated in Figures 14A-F and 15. In particular, Figures 14A and 14D show in transverse cross-section examples of composite sticks according to the present invention, which comprise a solid composition of a first material having a coating of a second material on all of its longitudinal surfaces.

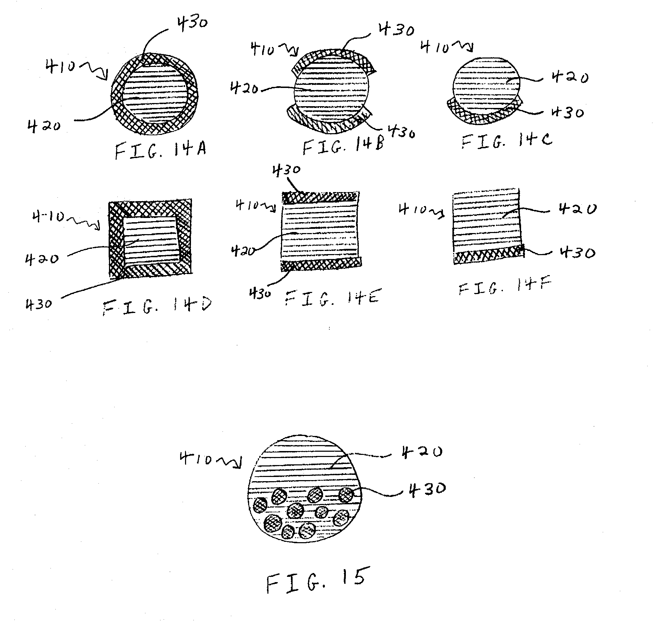

In Figures 14B and 14E, examples of composite sticks are shown, which comprise a solid composition of a first material, which is coated on only its upper and lower longitudinal surfaces with a composition of a second matrial. Figures 14C and 14F illustrate examples of composite sticks comprising a solid composition having a coating of a second material only on its lower surface.

A further example of the composite stick of the present invention is shown in Figure 15. This example illustrates in transverse cross-section a solid composition containing multiple components of a second material. Like the coating of the second material in the examples described above, the multiple components illustrated in Figure 15 act to dislodge contaminating material from a steel surface before the surface is contacted with the composition of the first material, and to dictate the wear rate of the composite stick. Although the example shown in Figure 15 has the components of the second material concentrated in the bottom region of the solid composition of the first material, it is to be understood that various other arrangements are possible, including staggered and random distributions.

The composite stick may be of any length and of any curvature. For example, the composite stick may be in the form of a single straight stick, a single arc-shaped stick, or a set of straight or arc-shaped sticks having features that permit their fitting together, such as a male end and a corresponding female receiving end. It is not required, however, that the set of composite sticks include an interlocking feature, and, as a result, any end, including a flat surface, may be used on the composite sticks. The solid composition may have any type of transverse cross sectional shape, including but not limited to square, circular, elliptical, rectangular, or triangular.

The arc-shaped composite sticks may be used in any applicator having an arc-shaped conduit, for example, the applicator described in U.S. Application Serial No. 10/389,387 (U.S. '387), the disclosure of which is incorporated herein by reference.

The applicator of US '387 is shown in Figure 16. This applicator (440) defines two contiguous openings: an arc-shaped conduit (450) for accommodating an arc-shaped composition stick (460), and a passageway (470) in communication with the conduit (450). The applicator (440) also includes a biasing element (480) and a contact stick (490). The biasing element (480) advances contact stick (490) through the conduit (450) and ensures that the contact stick (490) presses against and pushes the composition stick (460) through the conduit (450). The contact stick (490) also ensures contact of the composition stick (460) with a surface to be treated.

The above description is not intended to limit the claimed invention in any manner, furthermore, the discussed combination of features might not be absolutely necessary for the inventive solution.

The present invention will be further illustrated in the following examples. However it is to be understood that these examples are for illustrative purposes only, and should not to be used to limit the scope of the present invention in any manner.

### Example

A stick tester was designed in house to simulate abrasion of LCF sticks due to sand. Several plastic candidates with good wear characteristics were tested. Composite LCF sticks made with these plastics were tested against a regular LCF stick.

Ware resistance was measured using a Stick Tester. The stick tester is comprised of a rotating wheel, a sand feeding device, a nib and a laser system for measuring length. The rotating wheel is set at a certain speed while sand is dispensed at a controlled rate onto the wheel. The steel nib is used to pulverize the sand onto the wheel to roughen and at the same time increase the concentration of debris on the wheel surface. The pressure of the nib against the wheel surface can also be adjusted. An applicator is mounted to the stick tester with the applicator mouth directed at the wheel surface. As the sample wears down, the laser system can detect the length change of the sample. The stick cross ection area and the load applied for all samples are kept constant. Using this method, and for the purpose of example only which is not to be considered limiting in any manner, the wear rates of the composite sticks comprising the consumable member and one composition stick (prepared according to EP 4745, 570; LCF) were from about 0.05mm to 0.13 mm per 60 minutes of testing. In the absence of the consumable member, the wear rate of an equivalent composition stick (LCF) was 0.79 mm per 60 minutes. The composite sticks exhibit from about 6 to about 15 times more stick life than the standard LCF stick.

All citations are herein incorporated by reference.

The present invention has been described with regard to preferred embodiments. However, it will be obvious to persons skilled in the art that a number of variations and modifications can be made without departing from the scope of the invention as described herein.

## Claims

1. An applicator for a consumable member, comprising, a hub connected to one or more than one mounting element, the one or more than one mounting element for connecting the hub to the consumable member, a spindle pivotally connected to the hub, and a biasing assembly for rotating the hub relative to the spindle.

2. The applicator of claim 1, further comprising the consumable member.

3. The applicator of claim 2, wherein the consumable member is arc-shaped.

4. The applicator of claim 2 or 3, wherein the consumable member comprises two, or more than two materials.

5. The applicator of claim 4, wherein the two, or more than two materials comprise a solid lubricant composition and one, or more than one non-lubricant material.

6. The applicator of claim 5, wherein the one, or more than one non-lubricant material comprises one, or more than one polymeric material.

7. The applicator of claim 2 or 3, wherein the consumable member comprises an arc-shaped composition stick made of a first material, the arc-shaped composition stick abutted on one, or more than one surface by a composition made of a second material.

8. The applicator of claim 2 or 3, wherein the consumable member comprises a housing defining an arc-shaped conduit, the arc-shaped conduit sized to accept an arc-shaped composition stick, and wherein the arc-shaped composition stick is made of a first material and the housing is made of a second material.

9. The applicator of claim 8, further comprising the arc-shaped composition stick.

10. The applicator of claim 2 or 3, wherein the consumable member defines an arc-shaped channel, the arc-shaped channel sized to accept an arc-shaped composition stick, wherein the arc-shaped composition stick is made of a first material and the consumable member is made of a second material.

11. The applicator of claim 10, further comprising the arc-shaped composition stick.

12. The applicator of claim 8 or 9, wherein the conduit comprises a continuous top wall, a continuous bottom wall, a continuous inner wall, and a continuous outer wall.

13. The applicator of claim 8 or 9, wherein the conduit comprises a continuous inner wall, a continuous top wall, a continuous bottom wall, a flange extending from the outer edge of the top wall, and a flange extending from the outer edge of the bottom wall.

14. The applicator of claim 10 or 11, wherein the channel comprises a continuous top or bottom wall, and flanges extending from the inner and outer edges of the top or bottom wall.

15. The applicator of any one of claims 7 to 14, wherein the first material is a lubricant, and the second material is a non-lubricant material.

16. The applicator of claim 15, wherein the non-lubricant material is a polymeric material.

17. The applicator of claim 16, wherein the polymeric material comprises polybutylene terephthalate (PBT), polyethylene terephthalate (PET) or an acetal thermoplastic.

18. The applicator of any one of claims 7 to 17, wherein the arc-shaped stick comprises a set of interlocking arc-shaped sticks.

19. The applicator of any one of claims 2 to 18, wherein the consumable member is positioned about the outside of the hub.

20. The applicator of any one of claims 2 to 18, wherein the hub is cylindrical in shape, and wherein the arc-shaped consumable member is positioned about the circumference of the hub.

21. The applicator of any one of claims 1 to 20, wherein the applicator further comprises a mounting plate for connecting the hub to the arc-shaped consumable member.

22. The applicator of claim 21, wherein the mounting plate is fixedly connected about the outside of the hub.

23. The applicator of any one of claims 1 to 22, further comprising a locking arm for fixing the position of the hub relative to the spindle.

24. The applicator of any one of claims 1 to 23, further comprising an external mounting plate, wherein the spindle is fixedly connected to the external mounting plate.

25. The applicator of claim 24, wherein the external mounting plate is for connecting the applicator to an undercarriage of a railcar.

26. The applicator of claim 25, wherein the external mounting plate is for connection to a bracket connected to an undercarriage of a railcar.

27. The applicator of any one of claims 1 to 26, wherein the biasing assembly is in operative association with the spindle and with the hub.

28. The applicator of any one of claims 1 to 27, wherein the biasing assembly is a spring assembly.

29. A composite stick for lubricating a metal surface, comprising a solid composition made of a first material, wherein one, or more than one surface of the solid composition has a coating of a composition comprising a second material.

30. The composite stick of claim 29, wherein the second material has a wear resistance that is the same or greater than that of the first material, and a relatively lower value of hardness than the metal surface.

31. The composite stick of claim 29 or 30, wherein the metal surface is the flange of a rail car wheel.

32. The composite stick of claim 31, wherein the coating is for removing contaminants from the flange of the rail car wheel.

33. The composite stick of any one of claims 29 to 32, wherein the first material is a lubricant, and the second material is a non-lubricant material.

34. The composite stick of claim 33, wherein the non-lubricant material is a polymeric material.

35. The composite stick of claim 34, wherein the polymeric material comprises polybutylene terephthalate (PBT), polyethylene terephthalate (PET) or an acetal thermoplastic.

36. The composite stick of any one of claims 29 to 35, wherein the composite composition stick is square in transverse cross-section.

37. The composite stick of any one of claims 29 to 35, wherein the composite composition stick is circular in transverse cross-section.

38. The composite stick of any one of claims 29 to 37, wherein the composition stick is an arc-shaped composition stick.
